# EUROPÄISCHE PATENTSCHRIFT

(11) **EP 1 426 632 B1**
(45) Veröffentlichungstag und Bekanntmachung des Hinweises auf die Patenterteilung: **02.08.2006**
(21) Anmeldenummer: 03104511.5
(22) Anmeldetag: 03.12.2003
(51) Int. Cl.: F16B 37/04

(54) **Befestigungselement**
Fastening element
Dispositif de fixation

(30) Priorität: 04.12.2002 DE 10256546
(43) Veröffentlichungstag der Anmeldung: 09.06.2004
(73) Patentinhaber: HILTI Aktiengesellschaft, 9494 Schaan (LI)
(72) Erfinder: Herb, Armin, 86974 Apfeldorf (DE)
(74) Vertreter: Wildi, Roland

(56) Entgegenhaltungen:
- DE-A- 4 243 185
- US-A- 4 486 133
- US-A- 5 628 598
- US-A- 5 655 865

## Beschreibung

### Technisches Gebiet

Die Erfindung betrifft ein Befestigungselement mit einem Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung. Das Befestigungselement weist weiter zumindest einen Anschlag zur stirnaussenseitigen Beaufschlagung der, die Montageöffnung begrenzenden Ränder der Hohlkörperlängsseiten auf, wobei der Anschlag mit dem Hintergreifteil mittels eines Befestigungsmittels verbunden ist. Zwischen dem Anschlag und dem Hintergreifteil ist ein Distanzteil mit zumindest einem Rastmittel angeordnet zur temporären Fixierung des Hintergreifteils in der ersten und/oder in der zweiten Stellung. Das Distanzteil ist einerseits drehfest mit dem Hintergreifteil und andererseits über das zumindest eine Rastmittel lösbar mit dem Anschlag verbunden.

### Stand der Technik

Befestigungselemente der genannten Art dienen zum Befestigen eines Gegenstandes beispielsweise auf einer C-förmigen Montageschiene. Die zur Anwendung gelangende Montageschiene kann hierzu beispielsweise an einem Untergrund befestigt sein. Das Befestigungselement wird in die Montageöffnung eingeführt und beispielsweise mittels einer Drehbewegung um 90° verdreht, so dass ein Hintergreifteil des Befestigungselements die Haltevorsprünge der Montageschiene hintergreift. In dieser Vorfixierung ist es möglich das Befestigungselement in Längsrichtung der Montageschiene zwecks Justierung zu verschieben. Um eine endgültige Befestigung des Befestigungselementes an der Montageschiene zu bewirken, wird das Hintergreifteil gegenüber einem Anschlag, beispielsweise durch eine Gewindestange, verspannt und damit an den Haltevorsprüngen festgeklemmt. Diese Gattung von Befestigungselementen eignet sich beispielsweise zum Befestigen von länglichen Gegenständen oder Leitungssträngen, wie Rohren oder dergleichen.

Ein derartiges Befestigungselement ist beispielsweise in der DE 100 52 534 A1 offenbart. Um eine Vorfixierung des bekannten Befestigungselements zu ermöglichen, ist zwischen dem Mutterelement und dem Anschlag ein vorgespanntes Federelement angeordnet. Durch eine Kupplung zwischen dem Anschlag und dem Hintergreifteil sind dessen Positionen genau festgelegt. Das Federelement bewirkt, dass das Hintergreifteil durch die Federkraft gegen den Anschlag gezogen wird und damit die Haltevorsprünge zwischen dem Hintergreifteil und dem Anschlag leicht geklemmt werden.

Nachteilig an der bekannten Lösung ist, dass das bekannte Befestigungselement mehrere, miteinander wirkende Elemente umfasst und aufwändig in dessen Herstellung ist.

Aus der US 4,486,133 A ist ein in eine Montageöffnung einer Montageschiene einführbares Befestigungselement bekannt, das ein Hintergreifteil sowie ein kegelstumpfförmiges Halteelement aus einem elastisch verformbaren Material aufweist, wobei das Halteelement über eine Schnappverbindung drehfest mit dem Hintergreifteil verbunden ist. Der grössere Durchmesser des Halteelementes ist grösser als der Abstand der, die Montageöffnung in der Montageschiene begrenzenden Ränder. Die Neigung der kegelstumpfförmigen Ausgestaltung des Halteelementes ist derart gewählt, dass im entlasteten Zustand des Halteelementes der Abstand zwischen der äusseren Auflagefläche an der Montageschiene und der mit den freien Rändern der Haltevorsprünge in Eingriff kommende Seite des Hintergreifteils kleiner als die Erstreckung der Haltevorsprünge in Einführrichtung des Befestigungselementes ist. Nach dem Einführen des Befestigungselementes drückt der Anwender mit seinem Daumen in das kegelstumpfförmigen Halteelement, wobei dieses sich verformt und das Hintergreifteil in eine Stellung gebracht wird, in der das Hintergreifteil durch Drehen des Daumens unter die freien Ränder der Haltevorsprünge gedreht werden kann. Nimmt der Anwender den Druck von dem Befestigungselement, dehnt sich das elastisch deformierbare Halteelement aus, wobei das Hintergreifteil mit den Haltevorsprüngen in Anlage kommt. Zur Befestigung eines Bauteils an der Montageschiene wird eine Schraube durch eine Durchführöffnung in dem Bauteil hindurchgeführt und in das Innengewinde des Hintergreifteils eingedreht, bis das Bauteil an der Montageschiene verspannt ist.

Die US 5,655,865 A zeigt ein Befestigungselement mit einem Hintergreifteil sowie mit einem Anschlag, wobei der Anschlag mit dem Hintergreifteil mittels eines Federelementes drehfest verbunden ist. Das Hintergreifteil wird in die Montageöffnung eingeführt und mittels Drehen des Anschlags um 90° gedreht, so gelangen am Hintergreifteil angeordnete Einführschrägen mit den freien Enden der Haltevorsprünge in Anlage, wobei das Hintergreifteil und der Anschlag axial auseinanderbewegt und das Federelement vorgespannt wird. Ist das Hintergreifteil zum Hintergreifen der Haltevorsprünge ausgerichtet, wird dieses von dem Federelement in Richtung des Anschlags gezogen und kommt mit den Haltevorsprüngen in Eingriff.

### Darstellung der Erfindung

Der vorliegenden Erfindung liegt die Aufgabe zugrunde, ein Befestigungselement mit einem verdrehbaren Hintergreifteil zu schaffen, das eine Vorfixierung erlaubt, welche eine korrekte Positionierung des Hintergreifteils gegenüber den Haltevorsprüngen sicherstellt. Des Weiteren soll das Befestigungselement wenige, einfach herstellbare Teile umfassen. Ferner soll das Befestigungselement handlich sein und eine einfache Montage gewährleisten.

Die Aufgabe ist durch die Merkmale des Anspruchs 1 gelöst. Gemäss der Erfindung umfasst ein Befestigungselement ein Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung. Das Befestigungselement weist weiter zumindest einen Anschlag zur stirnaussenseitigen Beaufschlagung der, die Montageöffnung begrenzenden Ränder der Hohlkörperlängsseiten auf, wobei der Anschlag mit dem Hintergreif teil mittels eines Befestigungsmittels verbunden ist. Zwischen dem Anschlag und dem Hintergreifteil ist ein Distanzteil mit zumindest einem Rastmittel angeordnet zur temporären Fixierung des Hintergreifteils in der ersten und/oder in der zweiten Stellung. Das Distanzteil ist einerseits drehfest mit dem Hintergreifteil und andererseits über das zu mindest eine Rastmittel lösbar mit dem Anschlag verbunden. Das Rastmittel ist federelastisch, z. B. an einem federelastischen Element, an dem Distanzteil gelagert.

Bei dem erfindungsgemässen Befestigungselement ist mittels dem Distanzteil und dem federeleastisch an dem Distanzteil gelagerten Rastmittel die Funktion eines Federelements und einer Kupplung vereinigt. Das Distanzteil ist beispielsweise an dem Hintergreifteil ausgebildet. Beim Einführen des Hintergreifteils in die Montageöffnung des Hohlkörpers ist das Befestigungselement in einer ersten Stellung, der sogenannten Transportstellung gehalten. Der Anschlag umfasst den Hohlkörper zumindest teilweise, so dass bei einer Drehung des Befestigungsmittels das Hintergreifteil in eine zweite Stellung, der sogenannten Sicherungsstellung, gebracht wird. Das Rastmittel wird dabei mitgedreht. In der Sicherungsstellung ist das Hintergreifteil vorzugsweise derart ausgerichtet, dass es die im Hohlkörper vorgesehenen Haltevorsprünge hintergreift. In einer Variante dazu kann das Distanzteil anstelle einer Ausbildung am Hintergreifteil an dem Anschlag ausgebildet sein.

Das Rastmittel ist beispielsweise auf zumindest einem Steg gelagert, der an dem Distanzteil ausgeformt ist und als federelastisches Element für das Rastmittel dient. Bevorzugt ist ein Rastmittel auf zwei Stegen gelagert, die gegeneinander ausgerichtet sind und im Wesentlichen nur eine Bewegung des Rastmittels in einer Richtung zulassen. Anstelle von Stegen kann ein Bügel für die Funktion des federelastischen Elements an dem Distanzteil vorgesehen werden.

Der Abstand zwischen dem Anschlag und dem Hintergreifteil in der Transportstellung ist grösser als die Erstreckung der Haltevorsprünge des Hohlkörpers in der Richtung senkrecht zum Anschlag. In der Sicherungsstellung beträgt der Abstand zwischen dem Anschlag und dem Hintergreifteil vorzugsweise nur noch der Erstreckung der Haltevorsprünge. Damit ist eine Vorfixierung des Befestigungselements gegeben und das Befestigungselement kann gegebenenfalls entlang der Montageöffnung bis zum Erreichen der gewünschten Position in Längsrichtung des Hohlkörpers verschoben werden. Durch Verspannen des Befestigungsmittels wird das Hintergreifteil in Richtung des Anschlags bewegt, bis das Hintergreifteil sich mit den Haltevorsprüngen verspannt und somit das Befestigungselement an dem Hohlkörper fixiert ist. Das erfindungsgemässe Befestigungselement wird beispielsweise zur Montage eines Montageteils an einer sogenannten C-förmigen Montageschiene verwendet, die zuvor an einem Bauteil befestigt worden ist.

Das Hintergreifteil ist vorzugsweise durch einen Bolzen mit dem Anschlag verbunden, wobei das Hintergreifteil reibschlüssig oder kraftschlüssig und der Anschlag drehbar mit dem Bolzen verbunden ist. Der Bolzen weist bevorzugt an dem, dem Hintergreifteil abgewandten Ende ein Drehmomentübertragungsmittel auf, das den Anschlag zumindest teilweise überragt. Der Bolzen ist beispielsweise als Schraube mit einem Sechskant-Schraubenkopf ausgebildet.

Vorzugsweise ist das Distanzteil als ein separates Teil ausgebildet. Damit lässt sich der Aufwand zur Herstellung des Anschlags sowie des Hintergreifteils des Befestigungselements wesentlich gegenüber einer Ausführung reduzieren, bei der das Distanzteil direkt an dem Anschlag oder an dem Hintergreifteil ausgebildet ist. Zudem wird das Befestigungselement flexibler in der Anwendung. Mittels verschiedener Ausführungen von Distanzteilen, insbesondere mit der Variation der Höhenerstreckung des Distanzteils, kann nur durch Auswechseln des Distanzteils das Befestigungselement in unterschiedlich ausgestalteten Hohlkörpern und Montageschienen verwendet werden.

Bevorzugt umfasst das zumindest eine Rastmittel eine Nase zum Eingriff in zumindest eine als Gegenrastmittel ausgebildete Halterung, beispielsweise eine als Gegenrastmittel ausgebildete Vertiefung, wobei das Rastmittel und das Gegenrastmittel in der ersten und/oder zweiten Stellung formschlüssig zusammenwirken. Durch eine axiale Bewegung des Befestigungsmittels senkrecht zum Anschlag, ist das Befestigungselement zwischen der ersten, als Transportstellung dienenden Stellung und zumindest einer weiteren, als Sicherungsstellung dienenden Stellung stellbar. Da die Rastmittel federelastisch am Distanzteil ausgebildet sind, löst sich beispielsweise die formschlüssige Verbindung in der Transportstellung bei einer Drehbewegung des Befestigungselements. Sind die Gegenrastmittel als Vertiefungen ausgebildet, entsteht beim Lösen der Verbindung zwischen dem Rastmittel und dem Gegenrastmittel ein sensorielles Empfinden bezüglich dieses Vorgangs. Die Gegenrastmittel können auch derart angeordnet sein, dass bei Erreichen der Sicherungsstellung die Rastmittel in die entsprechende Vertiefung einrasten.

Anstelle einer Vertiefung kann das Gegenrastmittel als Halterungen ausgebildet sein. Beispielsweise ist an dem Anschlag zumindest ein Vorsprung in Form eines scheibenartigen Kreisringabschnitts vorgesehen, an dem in der ersten Stellung, beziehungsweise in der Transportstellung, ein mit einer Nut versehenenes Rastmittel den Vorsprung abgreift. Vorzugsweise sind zumindest zwei Vorsprünge an dem Anschlag vorgesehen. In einer Variante zu den zuvor beschriebenen Halterungen sind an dem Anschlag zwei Vorsprünge vorgesehen, die jeweils um den halben Umfang verlaufen und wendelförmig ansteigen. Unter wendelförmig wird in diesem Zusammenhang verstanden, dass sich der Abstand zwischen der Oberkante des Vorsprungs zum Anschlag hin stetig in Drehrichtung verringert. Beim Drehen des Befestigungsmittels wird das Hintergreifteil aus der Transportstellung in die Sicherungsstellung gebracht, wobei das Rastmittel und somit das Hintergreifteil während dem Stellungswechsel stetig seinen Abstand zum Anschlag verringert, bis das Hintergreifteil an den Haltevorsprüngen vorfixiert ist.

Vorteilhafterweise sind an dem Anschlag zumindest doppelt so viele Gegenrastmittel vorgesehen, wie Rastmittel am Distanzteil vorhanden sind, zur Erzeugung von zumindest der Transportstellung und der zumindest einen Sicherungsstellung des Befestigungselements. Beim Einleiten der Relativbewegung senkrecht zum Anschlag löst sich, infolge der federelastischen Lagerung des Rastmittels am Distanzteil, die formschlüssige Verbindung in der Transportstellung und bei Erreichen der Sicherungsstellung, die der Stellung zum Hintergreifen von den im Hohlkörper vorgesehenen Haltevorsprünge des Hintergreifteils entspricht, rasten die Rastmittel in die entsprechende Vertiefung ein. Dem Anwender wird bei dieser Ausführung des Befestigungselements ein Sicherheitsgefühl vermittelt, das im die Gewissheit gibt, dass das Hintergreifteil zum Hintergreifen der im Hohlkörper vorgesehenen Haltevorsprünge korrekt ausgerichtet ist.

Bevorzugt sind die Rastnasen als zwei, am Distanzteil diametral gegenüberliegend angeordnete Nasen ausgebildet, die in der ersten Stellung in zwei Vertiefungen des Anschlusses formschlüssig eingreifen, wobei die Vertiefungen die Nasen nur teilweise aufnehmen. Mit zwei als Rastmittel ausgebildeten Nasen ist eine hohe Sicherheit gegen ein unabsichtliches Lösen der formschlüssigen Verbindung zwischen den Nasen und den Vertiefungen gegeben. Da die Vertiefungen die Nasen nur zum Teil aufnehmen, kann diese formschlüssige Verbindung ohne grossen Kraftaufwand gelöst werden, wenn das Hintergreifteil z. B. mittels einer Drehbewegung von der ersten Stellung in die zweite Stellung gebracht wird. Um den Widerstand der formschlüssigen Verbindung bei einer Drehbewegung des Befestigungsmittels zu reduzieren und somit die Anwendung des Befestigungselements für den Anwender zu leichtern, kann die Vertiefung zumindest in der Drehrichtung des Befestigungselements eine rampenartige Abflachung aufweisen, die die Tiefe der Vertiefung kontinuierlich reduziert.

Vorzugsweise weisen die, die erste Stellung, beziehungsweise die, die Transportstellung definierenden Gegenrastmittel eine Tiefe X für die Rastmittel auf und die, die zweite Stellung, beziehungsweise die Sicherungsstellung definierenden Gegenrastmittel weisen eine Tiefe grösser als die Tiefe X auf. Mit dieser bevorzugten Ausgestaltung der Gegenrastmittel ist gewährleistet, dass der Abstand zwischen dem Anschlag und dem Befestigungselement in der Sicherungsstellung kleiner als in der Transportstellung ist. Somit ist das Hintergreifen des Hintergreifteils in der Sicherungsstellung unterstützt. Ist die Montageöffnung des Hohlkörpers als eine längs des Hohlköpers verlaufender Schlitz ausgebildet, wie es z. B. bei einer C-förmigen Montageschiene gegeben ist, ist nur in der Transportstellung die Anordnung von Gegenrastmitteln erforderlich. Wird das Befestigungselement von der ersten Stellung in die zweite Stellung gebracht, liegen die Rastnasen des Distanzteils in der Ebene der Montageöffnung. Da die Rastnasen in dieser Stellung an keinem Element anstehen, wird der Abstand zwischen dem Anschlag und dem Hintergreifteil auf den, infolge der Höhenerstreckung des Distanzteils vorhandenen Abstand reduziert, womit das Hintergreifteil die Haltevorsprünge hintergreifen kann.

Vorteilhafterweise ist das Distanzteil als im Wesentlichen ringförmiges Element ausgebildet, das auf der, dem Hintergreifteil abgewandten Seite des Befestigungselements angeordnet ist. Das Distanzteil ist beispielsweise fest an dem Hintergreifteil oder fest an dem Anschlag angeordnet. Die Verdrehsicherheit des Distanzteils zu dem Teil, an dem das Distanzteil angeordnet ist, wird bevorzugt mit Rastelementen gewährleistet, die in Gegenrastelemente eingreifen. In einer Variante dazu kann das Distanzteil an dem entsprechenden Teil beispielsweise aufgepresst oder aufgespritzt sein, um die Verdrehsicherheit zwischen dem Distanzteil und dem anderen Teil zu schaffen.

Vorzugsweise weist das Distanzteil federnde, optional zwei diametral gegenüberliegend angeordnete Bügel auf, die in der zweiten Stellung, beziehungsweise in der Sicherungsstellung des Befestigungselements an den Haltevorsprüngen senkrecht zum Anschlag verspannt sind. Der, beziehungsweise die Bügel sind beispielsweise als Schlaufen ausgebildet, die eine gewisse Verformbarkeit aufweisen. Beim Drehen des Befestigungsmittels wird das Hintergreifteil aus der Transportstellung herausbewegt. Sobald der Widerstand beim Drehen des Befestigungsmittels zunimmt, weiss der Anwender, dass das Hintergreifteil zum Hintergreifen der Haltevorsprünge ausgerichtet ist. Diese Ausführungsform ist vorteilhaft, wenn in der Sicherungsstellung keine Gegenrastmittel für die Rastmittel vorgesehen sind.

Bevorzugt weist der Bügel einen integrierten Anschlag auf. Mit diesen Bügeln wird ein unbeabsichtigtes Überdrehen des Befestigungselements beim Montieren verhindert, da der integrierte Anschlag vorzugsweise einen derart hohen Widerstand bei der Verformung des Bügels erzeugt, dass dieser mit einfachen Mitteln nicht überwunden werden kann.

Vorteilhafterweise ist das Distanzteil mit dem oder den Rastmitteln (15.1, 15.2; 57.1, 57.2; 68.1, 68.2) und dem oder den federelastischen Elementen (43.1, 43.2, 44.1, 44.2) einteilig gefertigt. Bevorzugt ist das Distanzteil aus einem Kunststoff gefertigt, z. B. in einem Spritz/Gussverfahren. In einer Variante dazu kann das Distanzteil aus einem Blech in einem Stanz-/Biegeverfahren gefertigt sein. Weiter kann das Distanzteil aus mehreren Teilen zusammengesetzt sein, wobei verschiedene Materialien kombinierbar sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1a: Einen Schnitt durch das erfindungsgemässe Befestigungselement in der Transportstellung;
- Fig. 1b: das in Fig. 1a gezeigte erfindungsgemässe Befestigungselement in der Sicherungsstellung;
- Fig. 2: eine Ansicht auf das Hintergreifteil mit dem erfindungsgemässen Distanzteil;
- Fig. 3: eine Ansicht auf ein Hintergreifteil mit einem weiteren, erfindungsgemässen Distanzteil im verspannten Zustand;
- Fig. 4: eine Ansicht auf das erfindungsgemässe Distanzteil;
- Fig. 5: einen Schnitt durch das erfindungsgemässe Distanzteil entlang der Linie V-V in Fig. 4;
- Fig. 6: einen Schnitt durch das erfindungsgemässe Distanzteil entlang der Linie VI-VI in Fig. 4;
- Fig. 7: einen Schnitt durch eine weitere Ausführungsform des erfindungsgemässen Befestigungselements;
- Fig. 8: einen Schnitt durch eine weitere Ausführungsform des erfindungsgemässen Befestigungselements; und
- Fig. 9: einen Schnitt durch das erfindungsgemässe Befestigungselement entlang der Linie IX-IX in Fig. 8.

Grundsätzlich sind in den Figuren gleiche Teile mit den gleichen Bezugszeichen versehen.

### Wege zur Ausführung der Erfindung

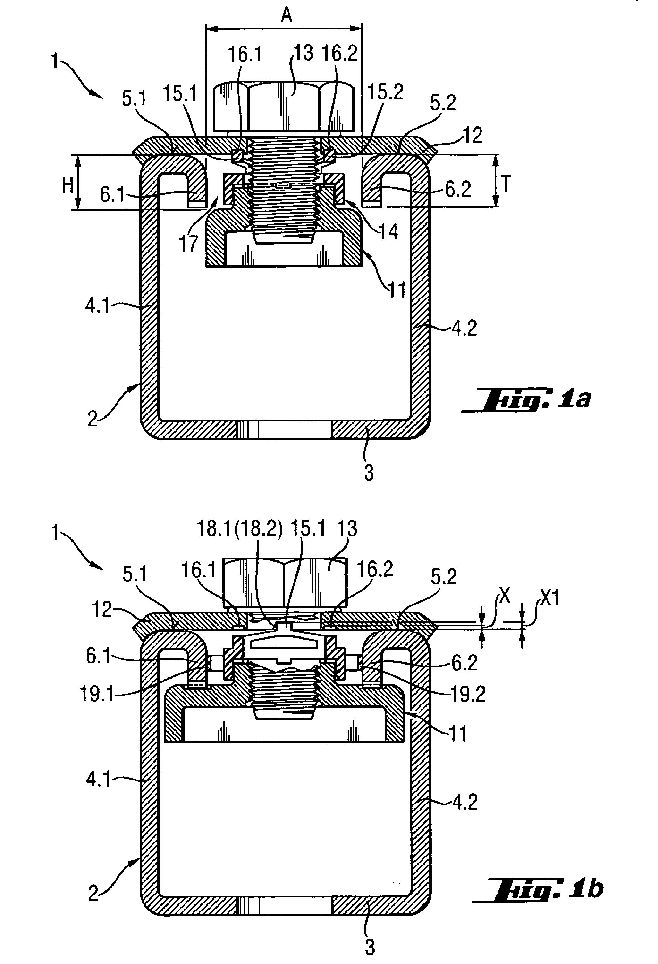

Fig. 1a zeigt einen Schnitt durch das erfindungsgemässe Befestigungselement in der Transportstellung und Fig. 1b das erfindungsgemässe Befestigungselement in der Sicherungsstellung. Das Befestigungselement 1 wird in eine C-förmigen Montageschiene 2 angeordnet. Die Montageschiene 2 weist einen Boden 3 und zwei, senkrecht zum Boden 3 ausgerichtete, parallel zueinander verlaufende Seitenwände 4.1 und 4.2 auf. Der freie Rand der Seitenwand 4.1 und der freie Rand der Seitenwand 4.2 sind nach Innen umgebogen, so dass jeweils eine Auflagefläche 5.1, bzw. 5.2 sowie jeweils ein Haltevorsprung 6.1, bzw. 6.2 ausgebildet ist. Die freien Ränder der Haltevorsprünge 6.1 und 6.2 sind mit einer Rändelung versehen.

Das Befestigungsmittel 1 umfasst ein Hintergreifteil 11 und einen Anschlag 12, die mittels der Schraube 13 verbunden sind. Das Hintergreifteil 11 weist ein Innengewinde auf, in das das Aussengewinde der Schraube 13 eingreift. Der Anschlag 12 ist mit einer Öffnung versehen, durch die die Schraube hindurchgesteckt werden kann. Zwischen dem Anschlag 12 und dem Hintergreifteil 11 ist das Distanzteil 14 fest am Hintergreifteil 11 angeordnet. Das Distanzmittel 14 wird nachfolgend noch detailliert beschrieben.

Das Distanzmittel 14 weist federelastisch gelagerte Nasen 15.1 und 15.2 auf, die in die Vertiefungen 16.1 und 16.2 eingreifen. Mit der formschlüssigen Verbindung zwischen der Nase 15.1 und der Vertiefung 16.1, sowie der Nase 15.2 mit der Vertiefung 16.2 wird die Transportstellung des Befestigungselements 1 definiert und gesichert. In der Transportstellung ist das Befestigungselement 1 lagerbar und kann in die Montageschiene 2 eingeführt werden. Das Hintergreifteil 11 wird in dieser Stellung des Befestigungselements 1 durch die Längsöffnung 17 in die Montageschiene 2 eingeführt, bis der Anschlag 12 an den Auflageflächen 5.1 und 5.2 anliegt. In der Transportstellung hält das Distanzteil 14 das Hintergreifteil 11 in einem Abstand H zu dem Anschlag 12, der grösser als die Erstreckung T der Haltevorsprünge 6.1 und 6.2 in Richtung des Bodens 3 der Montageschiene 2 ist.

Mittels einer Drehbewegung an der Schraube 13 dreht sich das Hintergreifteil 11 in der Montageschiene 2 bis sich das Hintergreifteil 11 in der Sicherungsstellung des Befestigungselement 1 befindet, was in der Fig. 1b dargestellt ist. An dem Anschlag 12 sind neben den Vertiefungen 16.1 und 16.2 die Vertiefungen 18.1 und (hier nicht dargestellt) 18.2 vorgesehen, in die die Nasen 15.1 und 15.2 eingreifen können. Die diametral gegenüberliegend angeordneten Vertiefungen 18.1 und 18.2 sind gegenüber den diametral gegenüberliegenden Vertiefungen 16.1 und 16.2 um 90° verdreht an dem Anschlag 12 und tiefer (X1) als die Vertiefungen 16.1 und 16.2 ausgebildet.

Um den Stellungswechsel zwischen der Transportstellung und der Sicherungsstellung zu erleichtern, sind die Flanken der Vertiefungen 16.1, 16.2, 18.1 und 18.2 abgeschrägt, so dass in Richtung der Drehbewegung zur Verspannung des Befestigungsmittels ein geringerer Drehaufwand für den Stellungswechsel benötigt wird als in die Gegendrehrichtung zur Entspannung des Befestigungsmittels. Zusätzlich weist das Distanzteil 14 Bügel 19.1 und 19.2 auf, die in der Sicherungsstellung des Befestigungselements 1 sich mit den Haltevorsprüngen 6.1 und 6.2 verspannen.

Fig. 2 stellt eine Ansicht auf das Hintergreifteil mit dem erfindungsgemässen Distanzteil dar. Das Hintergreifteil 11 ist mit den Rändelungen 21.1 und 21.2 versehen, die mit den Rändelungen an den Haltevorsprüngen 6.1 und 6.2 in der Sicherungsstellung des Befestigungselements 1 in Eingriff bringbar sind. Die Erstreckung B des Distanzteils 14 von der Aussenkante des Bügels 19.1 bis zur Aussenkante des Bügels 19.2 ist grösser als der innere Abstand A zwischen den Haltevorsprüngen 6.1 und 6.2 der Montageschiene 2 ausgebildet, so dass sich das Distanzteil 14 an den Haltevorsprüngen 6.1 und 6.2 in der Sicherungsstellung des Befestigungselements 1 in der Sicherungsstellung verspannt.

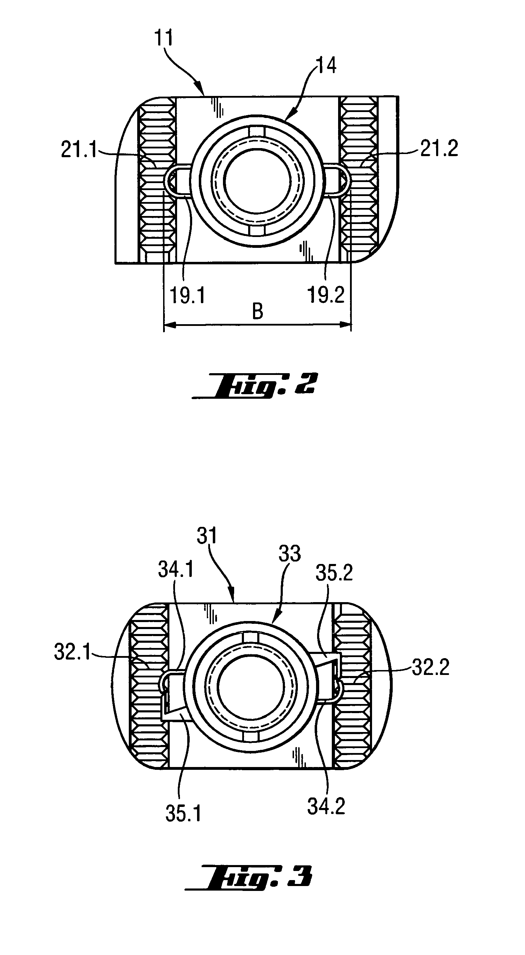

Fig. 3 stellt eine Ansicht auf ein Hintergreifteil mit einem weiteren, erfindungsgemässen Distanzteil im verspannten Zustand dar. Das Hintergreifteil 31 weist ebenfalls zwei Rändelungen 32.1 und 32.2 auf, die mit den Rändelungen an den Haltevorsprüngen 6.1 und 6.2 in Eingriff bringbar sind. Das fest an dem Hintergreifteil 31 angeordnete Distanzteil 33 weist zwei Bügel 34.1 und 34.2 auf. Der Schenkel 35.1 des Bügels 34.1 und der Schenkel 35.2 des Bügels 34.2, die jeweils in Gegendrehrichtung des Befestigungselements angeordnet sind, ist massiver als der entsprechende, andere Schenkel des Bügels 34.1, bzw. 34.2 ausgebildet. Beim Verspannen des Distanzteils an den Haltevorsprüngen wird durch die, als integrierte Anschläge wirkende Bügelabschnitte 35.1 und 35.2 ein für den Anwender mit einfachen Mitteln kaum überwindbarer Widerstand aufgebaut. Diese Ausführung gibt dem Anwender eine hohe Sicherheit über die effektive Position des Hintergreifteils 31 in der Montageschiene 2. Gleichzeitig wird ein Überdrehen des Befestigungselements bei dem Stellungswechsel von der Transport- in die Sicherungsstellung weitgehend verhindert.

In Fig. 4 ist eine Ansicht auf das erfindungsgemässe Distanzteil gezeigt. Das Distanzteil zur Anordnung an einem Hintergreifteil ist aus Kunststoff in einem Spritz-/Gussverfahren gefertigt.

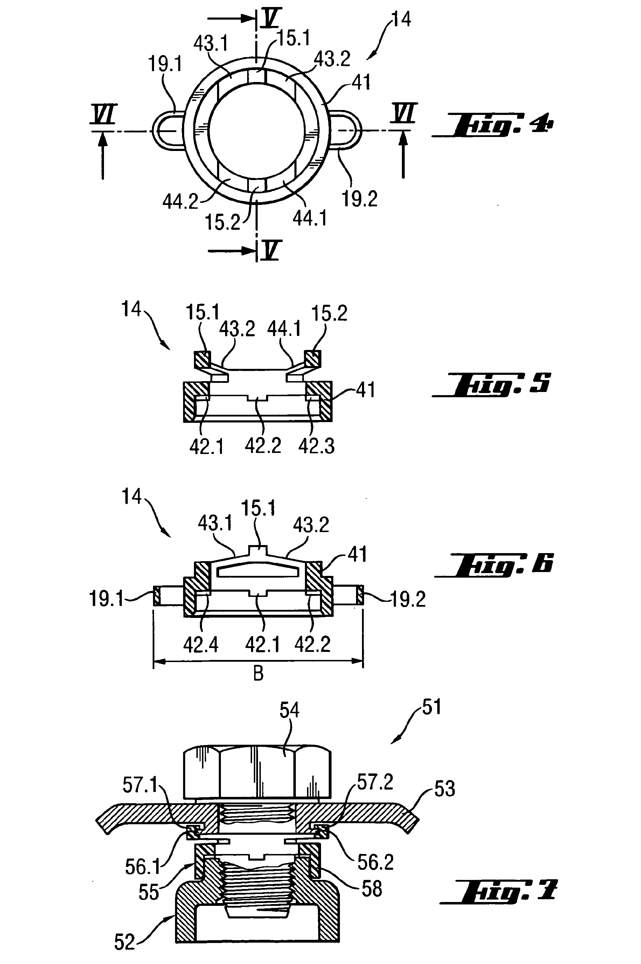

Fig. 5 zeigt einen Schnitt durch das erfindungsgemässe Distanzteil entlang der Linie V-V in Fig. 4. Das Distanzteil 14 weist einen kreiszylindrischen Grundkörper 41 und zwei Rastnasen 15.1 und 15.2 auf. Die Stege 43.1 und 43.2 sowie die Stege 44.1 und 44.2 bilden jeweils das federelastische Element zur federelastischen Lagerung der Rastnasen 15.1 und 15.2 an dem Grundkörper 41 des Distanzteils 14. Zur Sicherstellung der Verdrehsicherheit zwischen dem Hintergreifteil und dem Distanzteil 14 sind an dem Grundkörper 41 vier als Nasen ausgebildete Rastelemente 42.1, 42.2, 42.3 und 42.4 ausgebildet, die in entsprechend angeordnete, als Vertiefungen ausgebildete Gegenrastelemente an dem Hintergreifteil eingreifen.

Fig. 6 zeigt einen Schnitt durch das erfindungsgemässe Distanzteil entlang der Linie VI-VI in Fig. 4. Der Anwender des Befestigungsmittels nimmt durch das Einrasten der Nasen 15.1 und 15.2 in die, die Sicherungsstellung definierenden Vertiefungen an dem Anschlag die Positionierung des Hintergreifteils sensitiv und gegebenenfalls auch akustisch wahr. Die an den Haltevorsprüngen 6.1 und 6.2 sich verspannenden Bügel 19.1 und 19.2 dienen bei einer solchen Ausführung des Anschlags nur einer zusätzlichen Sicherheit bei der Montage des Befestigungsmittels. Sofern jedoch in der Sicherungsstellung des Befestigungsmittels keine Vertiefungen an dem Anschlag vorgesehen sind, stellen die Bügel 19.1 und 19.2 durch deren Verspannung mit den Haltevorsprüngen 6.1 und 6.2 die korrekte Positionierung des Hinter greifteils zum Hintergreifen der Haltevorsprünge 6.1 und 6.2 beim Verspannen des Befestigungselements sicher. Die Erstreckung in der Breite B des Distanzteils 14 von der Aussenkante des Bügels 19.1 bis zur Aussenkante des Bügels 19.2 ist aus den zuvor genannten Gründen grösser als der Abstand A der Innenkanten der Haltevorsprünge 6.1 und 6.2 des Hohlkörpers untereinander.

In Fig. 7 ist ein Schnitt durch eine weitere Ausführungsform des erfindungsgemässen Befestigungselements dargestellt. Das Befestigungselement 51 umfasst ein Hintergreifteil 52 und einen Anschlag 53, die mittels der Schraube 54 verbunden sind. Zwischen dem Hintergreifteil 52 und dem Anschlag 53 ist das Distanzteil 55 vorgesehen, das fest mit dem Hintergreifteil 52 verbunden ist. An dem Anschlag 53 sind zwei Bundabschnitte 56.1 und 56.2 mit jeweils einem scheiben- und kreisringartigen Vorsprung ausgebildet, wobei die Nasen 57.1, bzw. 57.2 diese Bundabschnitte 56.1 und 56.2 in der Transportstellung des Befestigungselements 51 abgreifen. Die Nasen 57.1 und 57.2 sind federelastisch an dem Grundkörper 58 des Distanzteils 55 gelagert. Wird das Befestigungselement 51 von der Transportstellung in die Sicherungsstellung durch Drehen der Schraube 54 gebracht, gleiten die Nasen 57.1 und 57.2 entlang der Bundabschnitte 56.1, bzw. 56.2. Vor dem Erreichen der Sicherungsstellung enden die Bundabschnitte 56.1 und 56.2, so dass die Nasen 57.1 und 57.2 beim weiteren Drehen der Schraube 54 sich in Richtung des Anschlags 53 bewegen und der Abstand zwischen dem Hintergreifteil 52 und dem Anschlag 53 verringert wird. Dadurch kann das Hintergreifteil 52 die Haltevorsprünge des Hohlkörpers hintergreifen und das Befestigungselement ist an dem Hohlkörper vorfixiert.

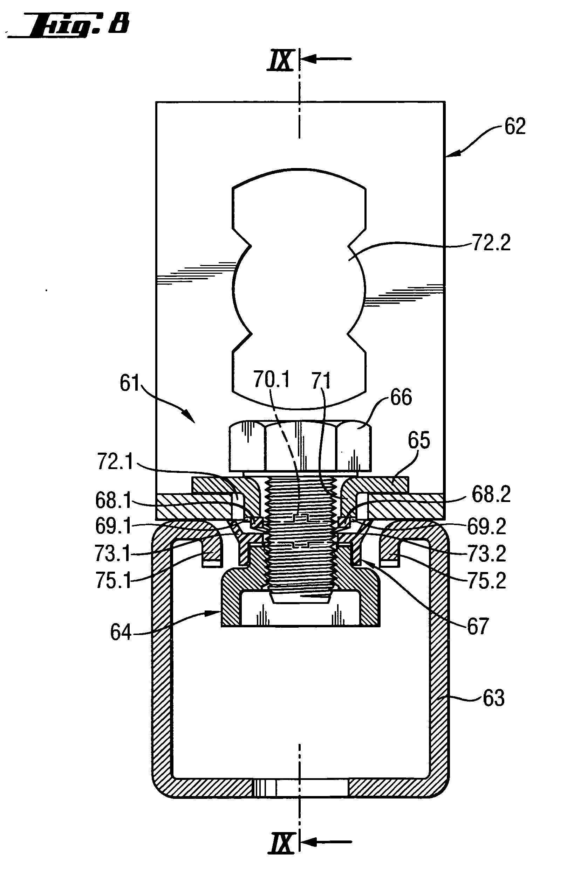

Fig. 8 stellt einen Schnitt durch eine weitere Ausführungsform des erfindungsgemässen Befestigungselements dar. Das Befestigungselement ist als Schienenmutter 61 zur Befestigung des L-förmigen Winkels 62 an der Montageschiene 63. Die Schienenmutter 61 umfasst ein Hintergreifteil 64 und einen Anschlag 65, die mittels der Schraube 66 verbunden sind. Zwischen dem Hintergreifteil 64 und dem Anschlag 65 ist das Distanzteil 67 vorgesehen. Das Distanzteil 67 weist Nasen 68.1 und 68.2 auf, die in Vertiefungen 69.1 und 69.2, die die Transportstellung der Schienenmutter 61 definieren, am Anschlag 65 eingreifen. Um 90° verdreht zu den Vertiefungen 69.1 und 69.2 sind die Vertiefungen 70.1 und 70.2, die die Sicherungsstellung der Schienenmutter 61 definieren, am Anschlag 65 ausgebildet. An dem Anschlag 65 ist ein Schaft 71 angeformt, der die Blechstärke des Winkels 62 bis zur Auflagekante der Montageschiene 63 überbrückt.

Mit dem Winkel 62 werden z. B. zwei Montageschienen miteinander verbunden. Der Winkel 62 ist mit zwei Öffnungen 72.1 und 72.2 versehen, durch die das Hintergreifteil 64 der Schienenmutter 61 in die Montageschiene 63 einführbar ist. An dem Distanzteil 67 sind zwei gegen den Anschlag 65 ausgerichtete Lappen 73.1 und 73.2 ausgeformt, die beim Einsetzen der Schienenmutter 61 in die Montageschiene 63 sich mit den Längsrändern der Öffnung 72.1 verhaken. Damit wird der Abstand zwischen dem Hintergreifteil 64 und dem Anschlag 65 gewährleistet, der eine Drehung des Hintergreifteils 64 im Innern der Montageschiene 63 erlaubt. Des Weiteren ermöglichen die Lappen 73.1 und 73.2 eine Vorfixierung der Schienenmutter 61 an dem Winkel 62 vor der Montage des Winkels 62 an der Montageschiene 63.

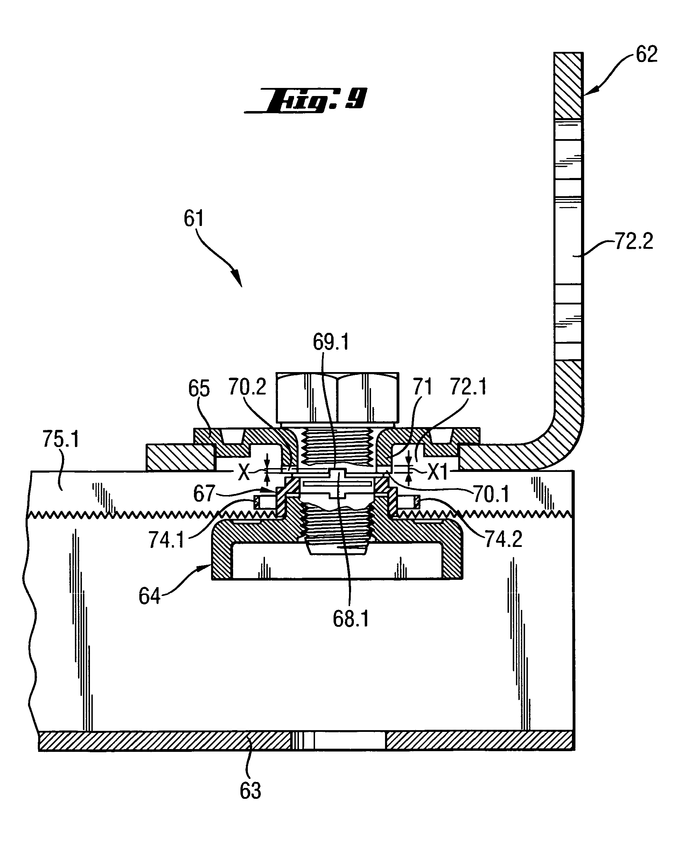

Fig. 9 zeigt einen Schnitt durch das erfindungsgemässe Befestigungselement entlang der Linie IX-IX in Fig. 8. Der Anschlag 65 ist auf die Kontur der Öffnungen 72.1 und 72.2 angepasst, so dass eine formschlüssige Verbindung zwischen der Schienenmutter 61 und dem Winkel 62 gegeben ist. Das Distanzteil 67 weist zwei verformbare Bügel 74.1 und 74.2 auf, die sich mit den Haltevorsprüngen 75.1 und 75.2 im Innern der Montageschiene 63 in der Sicherheitsstellung der Schienenmutter 61 verspannen.

Zusammenfassend ist festzustellen, dass das erfindungsgemässe Befestigungselement eine Vorfixierung erlaubt, welche eine korrekte Positionierung des Hintergreifteils gegenüber den Haltevorsprüngen sicherstellt, wobei das Befestigungselement nur wenige und einfach herstellbare Teile umfasst. Das Befestigungselement ist handlich in der Anwendung und gewährieistet eine einfache und sichere Montage.

## Patentansprüche

1. Befestigungselement mit einem Hintergreifteil (11; 31; 52; 64) zum Einführen in eine Montageöffnung (17) eines Hohlkörpers (2; 63) in einer ersten Stellung und zum Hintergreifen von im Hohlkörper (2; 63) vorgesehenen Haltevorsprüngen (6.1, 6.2; 75.1, 75.2) in einer zweiten Stellung, sowie mit zumindest einem Anschlag (12; 53; 65) zur stirnaussenseitigen Beaufschlagung der, die Montageöffnung (17) begrenzenden Ränder (5.1, 5.2) der Hohlkörperlängsseiten, wobei der Anschlag (12; 53; 65) mit dem Hintergreifteil (11; 31; 52; 64) mittels eines Befestigungsmittels (13; 54; 66) verbunden ist, und wobei zwischen dem Anschlag (12; 53; 65) und dem Hintergreifteil (11; 31; 52; 64) ein Distanzteil (14; 33; 55; 67) mit zumindest einem Rastmittel (15.1, 15.2; 57.1, 57.2; 68.1, 68.2) angeordnet ist zur temporären Fixierung des Hintergreifteils (11; 31; 52; 64) in der ersten und/oder in der zweiten Stellung, wobei das Distanzteil (14; 33; 55; 67) einerseits drehfest mit dem Hintergreifteil (11; 31; 52; 64) und andererseits über das zumindest eine Rastmittel (15.1, 15.2; 57.1, 57.2; 68.1, 68.2) lösbar mit dem Anschlag (12; 53; 65) verbunden ist, **dadurch gekennzeichnet, dass** das oder jedes Rastmittel (15.1, 15.2; 57.1, 57.2; 68.1, 68.2) federeleastisch an dem Distanzteil (14; 33; 55; 67) gelagert ist.

2. Befestigungselement nach Anspruch 1, **dadurch gekennzeichnet, dass** das Distanzteil (14; 33; 55; 67) als ein separates Teil ausgebildet ist.

3. Befestigungselement nach Anspruch 1 oder 2, **dadurch gekennzeichnet, dass** das zumindest eine Rastmittel eine Nase (15.1, 15.2; 57.1, 57.2; 68.1, 68.2) umfasst zum Eingriff in zumindest eine als Gegenrastmittel ausgebildete Halterung (56.1. 56.2), beispielsweise eine als Gegenrastmittelausgebildete Vertiefung (16.1, 16.2, 18.1, 18.2; 69.1, 69.2, 70.1, 70.2), wobei das Rastmittel (15.1, 15.2; 57.1, 57.2; 68.1, 68.2) und das Gegenrastmittel (16.1, 16.2, 18.1, 18.2; 56.1. 56.2; 69.1, 69.2, 70.1, 70.2) in der ersten und/oder zweiten Stellung formschlüssig zusammenwirken, und wobei durch eine axiale Bewegung des Befestigungsmittels (13; 54; 66), senkrecht zum Anschlag (12; 53; 65), das Befestigungselement (1; 51; 61) zwischen der ersten, als Transportstellung dienenden Stellung und zumindest einer weiteren, als Sicherungsstellung dienenden Stellung stellbar ist.

4. Befestigungselement nach einem der Ansprüche 1 bis 3, **dadurch gekennzeichnet, dass** an dem Anschlag (12; 65) zumindest doppelt so viele Gegenrastmittel (16.1, 16.2, 18.1, 18.2; 69.1, 69.2, 70.1, 70.2) vorgesehen sind, wie Rastmittel (15.1, 15.2; 68.1, 68.2) am Distanzteil (14; 33; 67) vorhanden sind, zur Erzeugung von zumindest der Transportstellung und der zumindest einen Sicherungsstellung des Befestigungselements (1; 61).

5. Befestigungselement nach einem der Ansprüche 1 bis 4, **dadurch gekennzeichnet, dass** die Rastmittel als zwei, am Distanzteil (14; 33; 67) diametral gegenüberliegend angeordnete Nasen (15.1, 15.2; 68.1, 68.2) ausgebildet sind, die in der ersten Stellung in zwei Vertiefungen (16.1, 16.2; 69.1, 69.2) des Anschlusses formschlüssig eingreifen, wobei die Vertiefungen (16.1, 16.2; 69.1, 69.2) die Nasen (15.1, 15.2; 68.1, 68.2) nur teilweise aufnehmen.

6. Befestigungselement nach einem der Ansprüche 1 bis 5, **dadurch gekennzeichnet, dass** die, die erste Stellung, beziehungsweise die Transportstellung definierenden Gegenrastmittel (16.1, 16.2; 69.1, 69.2) eine Tiefe X für die Rastmittel (15.1, 15.2; 68.1, 68.2) aufweisen und die, die zweite Stellung, beziehungsweise die Sicherungsstellung definierenden Gegenrastmittel (18.1, 18.2; 70.1, 70.2) eine Tiefe (X1) grösser als die Tiefe (X) aufweisen.

7. Befestigungselement nach einem der Ansprüche 1 bis 6, **dadurch gekennzeichnet, dass** das Distanzteil (14; 33; 55; 67) als im Wesentlichen ringförmiges Element ausgebildet ist, das auf der, dem Hintergreifteil (11; 31; 52; 64) abgewandten Seite des Befestigungselements (1; 51; 61) angeordnet ist.

8. Befestigungselement nach einem der Ansprüche 1 bis 7, **dadurch gekennzeichnet, dass** das Distanzteil (14; 33; 55; 67) federnde, optional zwei diametral gegenüberliegend angeordnete Bügel (19.1, 19.2; 34.1, 34.2; 74.1, 74.2) aufweist, die in der zweiten Stellung, beziehungsweise in der Sicherungsstellung des Befestigungselements (1; 51; 61) an den Haltevorsprüngen (6.1, 6.2; 75.1, 75.2) senkrecht zum Anschlag (12; 53; 65) verspannt sind.

9. Befestigungselement nach Anspruch 8, **dadurch gekennzeichnet, dass** der Bügel (34.1, 34.2) einen integrierten Anschlag (35.1, 35.2) aufweist.

10. Befestigungselement nach einem der Ansprüche 1 bis 9, **dadurch gekennzeichnet, dass** das Distanzteil (14; 33; 55; 67) mit dem oder den Rastmitteln (15.1, 15.2; 57.1, 57.2; 68.1, 68.2) und dem oder den federelastischen Elementen (43.1, 43.2, 44.1, 44.2) einteilig sowie, optional aus einem Kunststoff gefertigt ist.

## Claims

1. Fastening element comprising a rear engagement part (11; 31; 52; 64) for insertion into a mounting opening (17) in a hollow part (2; 63) in a first position and for engaging behind retaining projections (6.1, 6.2; 75.1, 75.2) provided in the hollow part (2; 63) in a second position, and comprising at least one stop (12; 53; 65) for acting upon the outer end faces of the edges (5.1, 5.2) of the longitudinal sides of the hollow part delimiting the mounting opening (17), the stop (12; 53; 65) being connected to the rear engagement part (11; 31; 52; 64) by means of a fastening means (13; 54. 66) and a spacer (14; 33; 55; 67) comprising at least one snap-in means (15.1, 15.2; 57.1, 57.2; 68.1, 68.2) being arranged between the stop (12; 53; 65) and the rear engagement part (11; 31; 52; 64) for temporarily fixing the rear engagement part (11; 31; 52; 64) in the first and/or in the second position, the spacer (14; 33; 55; 67), on the one hand, being connected in a torsion-resistant manner to the rear engagement part (11; 31; 52; 64) and, on the other hand, being releasably connected to the stop (12; 53; 65) by means of the at least one snap-in means (15.1, 15.2; 57.1, 57.2; 68.1, 68.2), **characterised in that** the snap-in means or each snap-in means (15.1, 15.2; 57.1, 57.2; 68.1, 68.2) is spring-mounted on the spacer (14; 33; 55; 67).

2. Fastening element according to claim 1, **characterised in that** the spacer (14; 33; 55; 67) is designed as a separate part.

3. Fastening element according to claim 1 or claim 2, **characterised in that** the at least one snap-in means includes a lug (15.1, 15.2; 57.1, 57.2; 68.1, 68.2) for engaging in at least one holder (56.1, 56.2) designed as a mating snap-in means, e.g. a recess (16.1, 16.2, 18.1, 18.2; 69.1, 69.2, 70.1, 70.2) designed as a mating snap-in means, the snap-in means (15.1, 15.2; 57.1, 57.2; 68.1, 68.2) and the mating snap-in means (16.1, 16.2, 18.1, 18.2; 56.1, 56.2; 69.1, 69.2, 70.1, 70.2) cooperating positively in the first and/or second position and the fastening element (1; 51; 61) being adjustable between the first position serving as the transport position and at least one further position serving as a locking position by means of an axial movement of the fastening means (13; 54; 66) perpendicular to the stop (12; 53; 65).

4. Fastening element according to one of claims 1 to 3, **characterised in that** at least twice as many mating snap-in means (16.1, 16.2, 18.1, 18.2; 69.1, 69.2, 70.1, 70.2) are provided on the stop (12; 65) as there are snap-in means (15.1, 15.2; 68.1, 68.2) present on the spacer (14; 33; 67) in order to produce at least the transport position and the at least one locking position of the fastening element (1; 61).

5. Fastening element according to one of claims 1 to 4, **characterised in that** the snap-in means are designed as two lugs (15.1, 15.2; 68.1, 68.2) arranged diametrically opposite one another on the spacer (14; 33; 67) and engaging positively in two recesses (16.1, 16.2; 69.1, 69.2) in the connection in the first position, the recesses (16.1, 16.2; 69.1, 69.2) only partially receiving the lugs (15.1, 15.2; 68.1, 68.2).

6. Fastening element according to one of claims 1 to 5, **characterised in that** the mating snap-in means (16.1, 16.2; 69.1, 69.2) defining the first position or the transport position have a depth X for the snap-in means (15.1, 15.2; 68.1, 68.2) and the mating snap-in means (18.1, 18.2; 70.1, 70.2) defining the second position or the locking position have a depth (X1) greater than the depth (X).

7. Fastening element according to one of claims 1 to 6, **characterised in that** the spacer (14; 33; 55; 67) is designed as a substantially annular element arranged on the side of the fastening element (1; 51; 61) directed away from the rear engagement part (11; 31; 52; 64).

8. Fastening element according to one of claims 1 to 7, **characterised in that** the spacer (14; 33; 55; 67) has resilient, optionally two clips (19.1, 19.2; 34.1, 34.2; 74.1, 74.2) arranged diametrically opposite one another and locked in place on the retaining projections (6.1, 6.2; 75.1, 75.2) perpendicular to the stop (12; 53; 65) in the second position or in the locking position of the fastening element (1; 51; 61).

9. Fastening element according to claim 8, **characterised in that** the clip (34.1, 34.2) has an integrated stop (35.1, 35.2).

10. Fastening element according to one of claims 1 to 9, **characterised in that** the spacer (14; 33; 55; 67) is made in one piece with the snap-in means (15.1, 15.2; 57.1, 57.2; 68.1, 68.2) and the resilient element or elements (43.1, 43.2, 44.1, 44.2) and is optionally made of a plastic.

## Revendications

1. Élément de fixation comprenant une pièce de retenue arrière (11 ; 31 ; 52 ; 64) destinée à être introduite dans une ouverture de montage (17) d'un corps creux (2 ; 63), dans une première position, et à s'engager derrière des saillies de retenue (6.1, 6.2 ; 75.1, 75.2) prévues dans le corps creux (2 ; 63), dans une deuxième position, et comprenant au moins une butée (12 ; 53 ; 65) pour solliciter le côté frontal extérieur des bords (5.1, 5.2) des côtés longitudinaux de corps creux qui délimitent l'ouverture de montage (17), la butée (12 ; 53 ; 65) étant reliée à la pièce de retenue arrière (11 ; 31 ; 52 ; 64) par l'intermédiaire d'un moyen de fixation (13 ; 54; 66), et dans lequel entre la butée (12 ; 53 ; 65) et la pièce de retenue arrière (11 ; 31 ; 52 ; 64) est disposée une pièce d'écartement (14 ; 33 ; 55 ; 67) avec au moins un moyen d'encliquetage (15.1, 15.2 ; 57.1, 57.2 ; 68.1, 68.2) pour le blocage temporaire de la pièce de retenue arrière (11 ; 31 ; 52 ; 64) dans la première et/ou la deuxième position, la pièce d'écartement (14 ; 33 ; 55 ; 67) étant, d'une part, solidarisée en rotation à la pièce de retenue arrière (11 ; 31 ; 52 ; 64) et, d'autre part, reliée de manière détachable à la butée (12 ; 53 ; 65) par l'intermédiaire du moyen d'encliquetage au nombre d'au moins un (15.1, 15.2 ; 57.1, 57.2 ; 68.1, 68.2), **caractérisé en ce que** le ou chaque moyen d'encliquetage (15.1, 15.2 ; 57.1, 57.2 ; 68.1, 68.2) est monté sur la pièce d'écartement (14 ; 33 ; 55 ; 67) avec l'élasticité d'un ressort.

2. Élément de fixation selon la revendication 1, **caractérisé en ce que** la pièce d'écartement (14 ; 33 ; 55 ; 67) est conçue sous la forme d'une pièce séparée.

3. Élément de fixation selon la revendication 1 ou 2, **caractérisé en ce que** le moyen d'encliquetage, au nombre d'au moins un, comprend un ergot (15.1, 15.2 ; 57.1, 57.2 ; 68.1, 68.2) destiné à s'engager dans au moins un dispositif de retenue (56.1, 56.2) conformé en moyen d'encliquetage antagoniste, par exemple dans un creux (16.1, 16.2, 18.1, 18.2 ; 69.1, 69.2, 70.1, 70.2) conformé en moyen d'encliquetage antagoniste, le moyen d'encliquetage (15.1, 15.2 ; 57.1, 57.2 ; 68.1, 68.2) et le moyen d'encliquetage antagoniste (16.1, 16.2, 18.1, 18.2 ; 56.1, 56.2 ; 69.1, 69.2, 70.1, 70.2) coopérant par complémentarité de formes dans la première et/ou deuxième position, et, par un déplacement axial du moyen de fixation (13 ; 54 ; 66) perpendiculairement à la butée (12 ; 53 ; 65), l'élément de fixation (1 ; 51 ; 61) pouvant être déplacé entre la première position servant de position de transport et au moins une autre position servant de position de sécurité.

4. Élément de fixation selon une des revendications 1 à 3, **caractérisé en ce que** sur la butée (12 ; 65) sont prévus au moins deux fois plus de moyens d'encliquetage antagonistes (16.1, 16.2, 18.1, 18.2 ; 69.1, 69.2, 70.1, 70.2) qu'il y a de moyens d'ericliquetage (15.1, 15.2 ; 68.1, 68.2) sur la pièce d'écartement (14 ; 33 ; 67) afin de définir au moins la position de transport et la position de sécurité, au nombre d'au moins une, de l'élément de fixation (1 ; 61).

5. Élément de fixation selon une des revendications 1 à 4, **caractérisé en ce que** les moyens d'encliquetage sont conformés en deux ergots (15.1, 15.2 ; 68.1, 68.2) qui sont disposés de manière diamétralement opposée sur la pièce d'écartement (14 ; 33 ; 67) et qui, dans la première position, s'engagent par complémentarité de formes dans deux creux (16.1, 16.2 ; 69.1, 69.2) de la liaison, les creux (16.1, 16.2 ; 69.1, 69.2) ne recevant les ergots (15.1, 15.2 ; 68.1, 68.2) que partiellement.

6. Élément de fixation selon une des revendications 1 à 5, **caractérisé en ce que** les moyens d'encliquetage antagonistes (16.1, 16.2 ; 69.1, 69.2) définissant la première position, respectivement la position de transport possèdent une profondeur X pour les moyens d'encliquetage (15.1, 15.2 ; 68.1, 68.2), et les moyens d'encliquetage antagonistes (18.1, 18.2 ; 70.1, 70.2) définissant la position de sécurité possèdent une profondeur (X1) supérieure à la profondeur (X).

7. Élément de fixation selon une des revendications 1 à 6, **caractérisé en ce que** la pièce d'écartement (14 ; 33 ; 55 ; 67) est conformée en élément sensiblement annulaire qui est disposé sur le côté de l'élément de fixation (1 ; 51 ; 61) orienté à l'opposé de la pièce de retenue arrière (11 ; 31 ; 52 ; 64).

8. Élément de fixation selon une des revendications 1 à 7, **caractérisé en ce que** la pièce d'écartement (14 ; 33 ; 55 ; 67) comporte des étriers élastiques, optionnellement diamétralement opposés (19.1, 19.2 ; 34.1, 34.2 ; 74.1, 74.2) qui, dans la deuxième position, respectivement dans la position de sécurité de l'élément de fixation (1 ; 51 ; 61), sont serrés contre les saillies de retenue (6.1, 6.2 ; 75.1, 75.2) perpendiculairement à la butée (12 ; 53 ; 65).

9. Élément de fixation selon la revendication 8, **caractérisé, en ce que** l'étrier (34.1, 34.2) comporte une butée intégrée (35.1, 35.2).

10. Élément de fixation selon une des revendications 1 à 9, **caractérisé en ce que** la pièce d''écartement (14 ; 33 ; 55 ; 67) est réalisée d'un seul tenant avec le ou les moyens d'encliquetage (15.1, 15.2 ; 5-7.1, 57.2 ; 68.1, 68.2) et avec le ou les éléments élastiques (43.1, 43.2, 44.1, 44.2) et optionnellement en matière plastique.
